# EUROPEAN PATENT SPECIFICATION

(11) **EP 0 588 198 B1**
(45) Date of publication and mention of the grant of the patent: **19.11.1997**
(21) Application number: 93114267.3
(22) Date of filing: 06.09.1993
(51) Int. Cl.: B60K 15/077, F02M 37/10

(54) **An anti-surge vessel for a motor vehicle fuel tank**
Stautopf für Kraftstofftank eines Kraftfahrzeuges
Bol anti-désamorçage pour le réservoir de carburant d'un véhicule à moteur

(30) Priority: 16.09.1992 IT TO920764
(43) Date of publication of application: 23.03.1994
(73) Proprietor: Bitron S.p.A., 10064 Pinerolo(Torino) (IT)
(72) Inventor: Bianco, Giovanni, I-17045 Legino (Savona) (IT)
(74) Representative: Marchitelli, Mauro

(56) References cited:
- EP-A- 0 295 428
- DE-A- 2 401 728
- DE-U- 9 101 313

## Description

The present invention relates to an anti-surge vessel for a motor vehicle fuel tank, of the type indicated in the pre-characterising portion of appended claim 1.

DE-A-2 401 728 discloses an anti-surge vessel of the type specified above.

The main problem associated with prior art anti-surge vessels as described above is that it is not possible to suck up the film of fuel at the bottom of the tank owing to the thickness of the bottom wall of the body constituting the anti-surge vessel. The thickness of this wall in fact keeps the fuel suction chamber raised above the bottom of the fuel tank.

The main object of the present invention is to provide an anti-surge vessel which makes it possible to suck up almost all the fuel in the tank, even when the fuel level is very low, and which therefore enables the entire volume of the tank to be used efficiently.

This object is achieved by virtue of the features set forth in claim 1.

Owing to these characteristics, it is possible to dispose the end portion of the recirculation duct adjacent the bottom of the fuel tank and, thanks to the converging flow passage and the ejector function performed by the end portion of the recirculation duct, to draw into the suction chamber of the hollow body even the fuel at the bottom of the tank.

Further characteristics and advantages of the present invention will become apparent from reading the detailed description which follows, given with reference to the appended drawings, provided purely by way of non limitative example, in which:

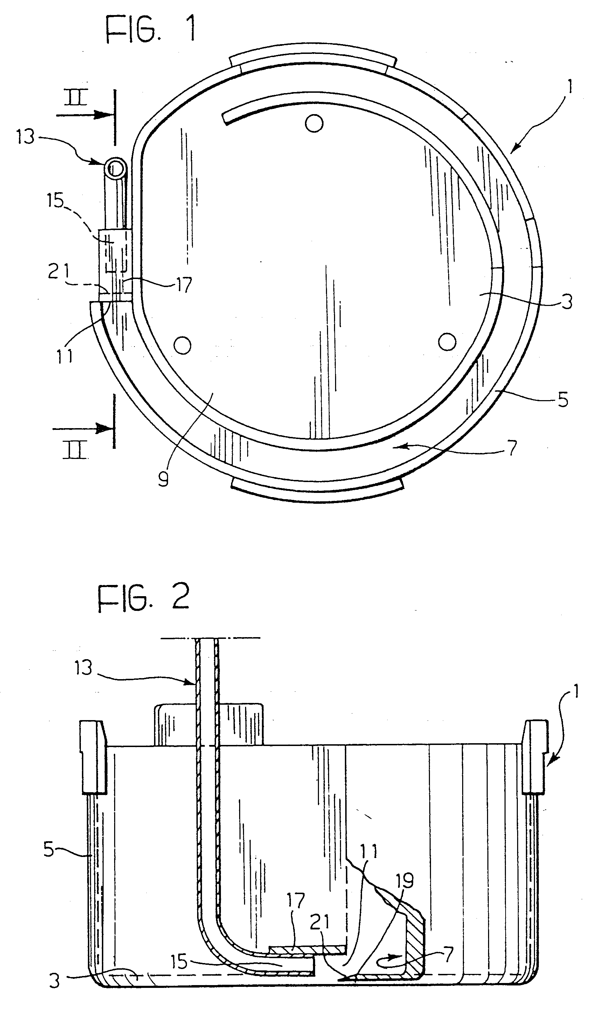

Figure 1 is an elevation side view of an anti-surge vessel according to the invention, and
Figure 2 is a side view, partially sectioned on the line II-II of the vessel of figure 1.

With reference to the drawings, an anti-surge vessel for a car fuel tank includes a hollow body, made for example of plastics material, generally indicated 1. The body 1 is substantially cylindrical and upwardly open. It has a bottom wall 3 intended to rest on the bottom of the fuel tank (not shown in the drawings).

The body 1 is further provided with a spiral side wall 5 so as to delimit a substantially circular duct 7 which extends around the lateral perimeter of the body 1 and which serves to put a suction chamber 9 within the body 1 into communication with the tank, through an inlet aperture 11.

Inside the chamber 9 an electrical pump (not shown) is arranged in known manner for sucking the fuel present in the chamber 9. The electrical pump delivers the fuel to the car engine and the excess fuel not used by the engine returns to the tank through a recirculation duct 13 arranged outside the hollow body 1. The duct 13 has an end portion 15 intended to be disposed parallel to and adjacent the bottom of the tank and to function as an ejector.

A tab 17, normally integral with the side wall 5 of the body 1, extends radially of the wall 5 and is arranged parallel to the bottom 3, near the aperture 11. The tab 17 is raised from the bottom wall 3 and therefore, when the body 1 is resting on the bottom of the tank, it is elevated with respect to the bottom of the tank.

The end portion 15 of the recirculation duct 13 is fitted between the tab 17 and the bottom of the tank, facing the aperture 11 so that a flow passage is delimited between the tab 17 and the bottom of the tank for the fuel in the tank, which flows into the duct 7 through this passage and the aperture 11.

A portion of the bottom wall 3, in correspondence with the aperture 11, cooperates with the tab 17 to define the said flow passage. This portion includes an end lip 19 which extends towards the end portion 15 of the recirculation duct 13 and has a surface 21 inclined relative to the bottom 3 of the body 1 and facing the tab 17 so as to define a cross-section of the flow passage which converges towards the interior of the body 1. Preferably, the lip 19 extends at least partly under the tab 17.

In use, any excess fuel conveyed to the engine is returned along the recirculation duct 13 as far as its end portion 15 where it opens into the converging duct delimited above by the tab 17 and below by the inclined surface 21 of the lip 19. The flow of recirculated fuel from the portion 15 creates a depression which draws fuel from the region at the bottom of the tank. In this way, the rate of fuel recirculation flow is exploited to draw the fuel in the tank through the flow passage into the duct 7. The converging cross-section of the flow passage accelerates the fuel entering the body 1 and therefore the fuel level in the chamber 9 is considerably higher than that in the tank, thus ensuring that the pump within the body 1 operates even with a minimal fuel level in the tank.

## Claims

1. An anti-surge vessel for the fuel tank of a motor vehicle, including a hollow body (1) with a bottom wall (3) intended to rest on the bottom of the fuel tank, said body (1) defining a substantially isolated fuel suction chamber (9) for communicating with the tank through an inlet aperture (11) with which is associated a fuel recirculation duct (13) which operates as an ejector to draw the fuel towards the interior of the suction chamber (9) through the inlet aperture (11), wherein the hollow body (1) has near its bottom wall (3) on the outside of a side wall a portion (17) delimiting a flow passage, this portion (17) being adapted to stand raised with respect to the bottom of the fuel tank and the flow passage having a cross-section converging towards the interior of the hollow body (1), the recirculation duct (13) having an end portion (15), adapted to be substantially parallel to the bottom of the fuel tank, this end portion (15) facing said converging cross-section flow passage and wherein said inlet aperture (11) is adapted to open on to the fuel tank at the converging cross-section flow passage,
characterised in that the said raised portion (17) delimits the flow passage together with part of the bottom wall (3) of the hollow body (1) having an end lip (19) extending from the bottom wall (3) towards the end portion (15) of the recirculation duct (13), fitted below the raised portion (17), this lip (19) having an inclined surface (21) sloping downwardly towards the bottom wall (3) and facing the raised portion (17), the lip (19) tapering in thickness and ending with a sharp edge intended for substantially touching the bottom wall of the tank, so that even the fuel at the bottom of the tank can be drawn into the suction chamber (9) of the hollow body (1).

2. An anti-surge vessel according to claim 1, characterised in that the said end lip (19) extends at least in part beneath the raised portion (17).

3. An anti-surge vessel according to claim 1 or 2, characterised in that the raised portion is a tab (17) extending to the exterior of the hollow body (1) and being substantially parallel to the bottom wall thereof (3).

4. An anti-surge vessel according to claim 1, characterised in that the flow passage opens into a duct (7) communicating with the suction chamber (9), which duct (7) extends along the perimeter of the hollow body (1).

5. A fuel tank for a motor vehicle including an anti-surge vessel according to any one of the preceding claims.

## Patentansprüche

1. Stautopf für den Kraftstofftank eines Kraftfahrzeugs, mit einem hohlen Körper (1) mit einer Bodenwand (3), die dazu bestimmt ist, auf dem Boden des Kraftstofftanks zu liegen, welcher Körper (1) eine im wesentlichen isolierte Kraftstoff-Saugkammer (9) zur Kommunikation mit dem Tank durch eine Einlaßöffnung (11) definiert, der eine Kraftstoff-Rückführleitung (13) zugeordnet ist, die als Ejektor arbeitet, um den Kraftstoff zum Inneren der Saugkammer (9) durch die Einlaßöffnung (11) zu ziehen, wobei der hohle Körper (1) nahe seiner Bodenwand (3) an der Außenseite einer Seitenwand einen Teil (17) aufweist, der einen Strömungsweg begrenzt, wobei dieser Teil (17) eingerichtet ist, aufrecht in bezug auf den Boden des Kraftstofftanks zu stehen, und der Strömungsweg einen Querschnitt aufweist, der zum Inneren des hohlen Körpers (1) konvergiert, die Rückführleitung (13) einen Endteil (15) aufweist, der eingerichtet ist, im wesentlichen parallel zum Boden des Kraftstofftanks zu verlaufen, wobei dieser Endteil (15) dem Strömungsweg mit konvergierendem Querschnitt zugewandt ist, und die Einlaßöffnung (11) eingerichtet ist, sich zum Kraftstofftank am Strömungsweg mit konvergierendem Querschnitt zu öffnen, dadurch gekennzeichnet, daß der erhöhte Teil (17) den Strömungsweg zusammen mit einem Teil der Bodenwand (3) des hohlen Körpers (1) begrenzt, der eine Endlippe (19) aufweist, die sich von der Bodenwand (3) zum Endteil (15) der Rückführleitung (13) erstreckt, und die unter dem erhöhten Teil (17) eingepaßt ist, wobei diese Lippe (19) eine geneigte Fläche (21) aufweist, die nach unten zur Bodenwand (3) abfällt und dem erhöhten Teil (17) zugewandt ist, wobei sich die Lippe (19) in der Dicke verjüngt und mit einer scharfen Kante endet, die dazu bestimmt ist, die Bodenwand des Tanks im wesentlichen zu berühren, so daß sogar der Kraftstoff am Boden des Tanks in die Saugkammer (9) des hohlen Körpers (1) gezogen werden kann.

2. Stautopf nach Anspruch 1, dadurch gekennzeichnet, daß sich die Endlippe (19) zumindest teilweise unterhalb des erhöhten Teils (17) erstreckt.

3. Stautopf nach Anspruch 1 oder 2, dadurch gekennzeichnet, daß der erhöhte Teil ein Ansatz (17) ist, der sich zur Außenseite des hohlen Körpers (1) erstreckt und im wesentlichen parallel zur Bodenwand (3) hievon angeordnet ist.

4. Stautopf nach Anspruch 1, dadurch gekennzeichnet, daß sich der Strömungsweg in eine Leitung (7) öffnet, die mit der Saugkammer (9) in Verbindung steht, welche Leitung (7) sich entlang des Umfangs des hohlen Körpers (1) erstreckt.

5. Kraftstofftank für ein Kraftfahrzeug mit einem Stautopf nach einem der vorhergehenden Ansprüche.

## Revendications

1. Bol anti-désamorçage pour le réservoir de carburant d'un véhicule automobile, comprenant un corps creux (1) ayant une paroi inférieure (3) destinée à reposer sur le fond du réservoir de carburant, ledit corps (1) définissant une chambre d'aspiration de carburant (9) sensiblement isolée, afin d'établir une communication avec le réservoir via une ouverture d'entrée (11) à laquelle est associé un conduit de recirculation de carburant (13), qui sert d'éjecteur afin d'attirer le carburant vers l'intérieur de la chambre d'aspiration (9), via l'ouverture d'entrée (11), dans lequel le corps creux (1) présente, près de sa paroi inférieure (3), à l'extérieur d'une paroi latérale, une partie (17) délimitant un passage d'écoulement, cette partie (17) étant adaptée de façon à se trouver surélevée par rapport au fond du réservoir de carburant et le passage d'écoulement ayant une section transversale convergeant vers l'intérieur du corps creux (1), le conduit de recirculation (13) ayant une partie d'extrémité (15) adaptée de façon à être sensiblement parallèle au fond du réservoir de carburant, cette partie d'extrémité (15) étant tournée vers ledit passage d'écoulement à section transversale convergente, et dans lequel
ladite ouverture d'entrée (11) est adaptée de façon à déboucher sur le réservoir de carburant au passage d'écoulement à section transversale convergente, caractérisé en ce que ladite partie surélevée (17) délimite le passage d'écoulement conjointement à une partie de la paroi inférieure (3) du corps creux (1) ayant une lèvre d'extrémité (19) s'étendant depuis la paroi inférieure (3) vers la partie d'extrémité (15) du conduit de recirculation (13), montée au-dessous de la partie surélevée (17), cette lèvre (19) ayant une surface inclinée (21) s'inclinant vers le bas en direction de la paroi inférieure (3) et tournée vers la partie surélevée (17), la lèvre (19) s'effilant dans le sens de l'épaisseur et s'achevant par un bord tranchant destiné à toucher sensiblement la paroi inférieure du réservoir, de manière que même le carburant se trouvant au fond du réservoir puisse être attiré dans la chambre d'aspiration (9) du corps creux (1).

2. Sol anti-désamorçage selon la revendication 1, caractérisé en ce que ladite lèvre d'extrémité (19) s'étend au moins en partie au-dessus de la partie surélevée (17).

3. Sol anti-désamorçage selon la revendication 1 ou 2, caractérisé en ce que la partie surélevée est une languette (17) s'étendant vers l'extérieur du corps creux (1) et sensiblement parallèle à sa paroi inférieure (3).

4. Sol anti-désamorçage selon la revendication 1, caractérisé en ce que le passage d'écoulement débouche dans un conduit (7) communiquant avec la chambre d'aspiration (9), ce conduit (7) s'étendant le long du périmètre du corps creux (1).

5. Réservoir de carburant pour un véhicule automobile, comprenant un bol anti-désamorçage selon l'une quelconque des revendications précédentes.
